Europäisches Patentamt

European Patent Office

Office européen des brevets

(19)

(11) Veröffentlichungsnummer: **0 090 883**
B1

(12) **EUROPÄISCHE PATENTSCHRIFT**

(45) Veröffentlichungstag der Patentschrift:
29.01.86

(21) Anmeldenummer: **82108951.3**

(22) Anmeldetag: **28.09.82**

(51) Int. Cl.⁴: **C 04 B 32/02**, C 04 B 41/65,
C 04 B 41/70

(54) **Wässrige Suspension zur Beschichtung von pyrogene Kieselsäure enthaltenden Formkörpern.**

(30) Priorität: **02.04.82 DE 3212261**
**14.07.82 EP 82710038**

(43) Veröffentlichungstag der Anmeldung:
**12.10.83 Patentblatt 83/41**

(45) Bekanntmachung des Hinweises auf die Patenterteilung:
**29.01.86 Patentblatt 86/5**

(84) Benannte Vertragsstaaten:
**AT BE CH DE FR GB IT LI LU NL SE**

(56) Entgegenhaltungen:
**EP - A - 0 027 633**
**EP - A - 0 044 178**
**DE - A - 2 918 689**
**US - A - 4 204 907**

(73) Patentinhaber: **Degussa Aktiengesellschaft,
Weissfrauenstrasse 9, D-6000 Frankfurt am Main 1 (DE)**

(72) Erfinder: **Schmidt, Sabine, Rober-Koch-Strasse 15,
D-6454 Bruchköbel (DE)**
Erfinder: **Kleinschmit, Peter, Dr., Wildaustrasse 19,
D-6450 Hanau 9 (DE)**
Erfinder: **Schwarz, Rudolf, Dr., Taunusstrasse 2,
D-8755 Alzenau-Wasserlos (DE)**

**Beschreibung**

Zu Wärmedämmformkörpern verpresste Hochtemperaturisolationsmaterialien bestehen aus ca. 40 bis 70 Gew.-% einer feinteiligen Komponente, wie z.B. pyrogen hergestelltem Silicumdioxid, 20 bis 50 Gew.-% Trübungsmittel, z.B. Rutil oder Ilmenit, und 1 bis 10 Gew.-% einer hochtemperaturbeständigen Faser, z.B. Aluminiumsilikatfaser, zur Erhöhung der mechanischen Stabilität. Die Wärmedämmformkörper können ebenfalls die Gestalt von Platten wie die von Hülsen oder Hüllen besitzen, wie sie z.B. für die Wärmeisolierung von Rohren oder Abgaskonvertern bei Autos verwendet werden.

Trocken verpresste Wärmedämmformkörper wie z.B. Wärmedämmplatten mit unterschiedlicher Dichte (200 bis 320 g/l) gelangen meist mit einer Umhüllung aus Glasfasergewebe (Borsilikatglas) in verschiedenen Ausführungen in den Handel.

Die genannten Wärmedämmplatten zeigen jedoch einen hohen Materialabrieb und geringe mechanische Festigkeit, insbesondere gegen Druck- und Biegebeanspruchung, die eine direkte Verarbeitung und Montage der Wärmedämmplatten ohne zusätzliches verstärkendes Material unmöglich macht. Zur Lösung dieses Problems wurden auch schon Wärmedämmplatten in eine Hülle aus Faserstoffgewebelagen eingebettet. Dieses Verfahren ist aber sehr arbeitsaufwendig und kostspielig, und weist insbesondere den Nachteil auf, dass die Hülle bei einer Temperaturbehandlung von 500 bis 700°C schmilzt (DE-B-2 036 124).

Gemäss der DE-A-2 941 606 ist ein Verfahren, bei dem verschiedene Bindersysteme direkt in den Isolierstoff miteingemischt werden und anschliessend thermisch oder katalytisch ausgehärtet werden, bekannt. Dieses Verfahren hat den Nachteil, dass die Wärmeleitfähigkeit der Wärmedämmplatten beträchtlich erhöht wird. Daraus resultiert eine erhebliche Verschlechterung nicht nur der Isolierwirkung, sondern auch der thermischen Stabilität.

Aufgabe der Erfindung ist es nun, zur Wärmeisolation geeignete Wärmedämmformkörper, wie z.B. Wärmedämmplatten, bei welchen die mechanischen Eigenschaften durch Erhöhung der Druck-Biege- und Abriebfestigkeit verbessert sind, zu finden. Dabei soll eine Verschlechterung der Isolier- und thermischen Eigenschaften der Wärmedämmformkörper nicht eintreten.

Gegenstand der Erfindung ist eine wässrige Suspension, bestehend neben Wasser aus 2 bis 50 Gew.-% eines Gemisches aus Bentonit und anorganischer Faser, mit einem Anteil an anorganischer Faser von 1 bis 30 Gew.-% und einem Anteil an Bentonit von 1 bis 30 Gew.-%, bezogen auf die Gesamtmenge der Suspension, wobei die Gesamtfeststoffmenge einen Anteil von 50 Gew.-%, vorzugsweise 40 Gew.-%, bezogen auf die Suspension, nicht überschreitet. Vorzugsweise enthält die erfindungsgemässe Suspension neben Wasser 4 bis 10 Gew.-% anorganischer Faser und 5 bis 15 Gew.-% Bentonit, bezogen auf die Gesamtmenge der Suspension, wobei die Gesamtfeststoffmenge einen Anteil von 25 Gew.-%, bezogen auf die Suspension, nicht überschreitet.

Die Suspension kann neben Wasser aus 10 bis 50 Gew.-% Bentonit und 1 bis 10 Gew.-% anorganischer Faser, bezogen auf die Suspension, bestehen. Die Suspension kann auch neben Wasser 10 bis 50 Gew.-% Bentonit und 1 bis 2 Gew.-% anorganische Faser, bezogen auf die Suspension, enthalten.

Als geeignet haben sich aber auch Suspensionen erwiesen, welche neben Wasser 10 bis 50 Gew.-% Bentonit und zwischen 2 bis 4 Gew.-% anorganischer Faser enthalten. In manchen Fällen erweist sich jedoch auch eine Suspension mit mehr als 10 Gew.-% anorganischer Faser als verwendbar.

Als anorganische Fasern können vorzugsweise Aluminiumsilikatfasern verwendet werden. Der $Al_2O_3$-Anteil kann dabei 5 bis 95 Gew.-% betragen.

Weitere anorganische Fasern, die auch untereinander im Gemisch eingesetzt werden können, bestehen aus Zirkonoxid, Kalziumsilikat, Asbest, Quarz und/oder silikatischen Gläsern.

Ein weiterer Gegenstand der Erfindung ist ein Verfahren zur Verbesserung der mechanischen Eigenschaften von Wärmedämmformkörpern, unter Verwendung der erfindungsgemässen Suspension, welches dadurch gekennzeichnet ist, dass man die wässrige Suspension, gegebenenfalls wiederholt, auf die Wärmedämmformkörper aufgibt, die Wärmedämmformkörper, gegebenenfalls bei einer Temperatur von 100 bis 150°C, trocknet.

Die Suspension kann mit Hilfe eines Spritzgerätes, das mit Druckluft betrieben werden kann, auf den Wärmedämmformkörper, der meist aus einem hochdispersen Füllstoff z.B. pyrogene Kieselsäure, Trübungsmittel und Fasern besteht, aufgesprüht werden. Die Suspension kann weiterhin mittels Tauchen, Streichen, Pinseln, Spachteln o.ä. auf den Wärmedämmformkörper aufgebracht werden. Beim Trocknen bildet sich schon nach kurzer Zeit eine elastische Haut auf dem Wärmedämmkörper. Die geringen Faserzusätze verhindern ein Aufplatzen der Hülle beim Trocknen. Um stärkere Schichtdicken zu erreichen, kann man das Aufspritzverfahren mehrmals wiederholen oder Suspensionen mit höherem Feststoffgehalt verwenden. Der erhaltene Wärmedämmformkörper besitzt nach der erfindungsgemässen Behandlung erheblich verbesserte mechanische Eigenschaften, bei vollem Erhalt der ursprünglichen Isolationswirkung.

In einer weiteren Ausführungsform der Erfindung kann man zusätzlich ein Fasernetz oder einen Faserfilz auf den Wärmedämmformkörper aufpressen und anschliessend die erfindungsgemässe Beschichtung aufbringen. Dadurch wird eine zusätzliche Erhöhung der mechanischen Festigkeit, hauptsächlich der Biegefestigkeit, erreicht.

Die Wärmedämmformkörper können nach einer besonders praxisgerechten Ausführungsform des erfindungsgemässen Verfahrens untereinander in einem Bausteinprinzip unter Anwendung der erfindungsgemässen Suspension verbunden werden, wodurch eine fugenfreie Verbindung der Wärmedämmformkörper möglich wird. Man gibt dazu die Suspension aus Bentonit, Wasser und Faser auf mindestens eine Seite der Wärmedämmformkörper auf und fügt die Wärmedämmformkörper dann mit weiteren Wärmedämmformkörpern so zusammen, dass die Suspension, indem sie bei Trocknung eine Zwischenschicht aus Bentonit und anorganischer Faser bildet, als Bindemittel wirkt.

Zur Erhöhung der Klebeeigenschaften können der Bentonitsuspension Kieselsäuresol oder Kieselsäureester zugemischt werden. Dabei wird die Menge dieser Zusätze so bemessen, dass die Bentonitsuspension weiterverarbeitet, beispielsweise versprüht, werden kann.

In einer weiteren Ausführungsform der Erfindung kann man auf die mit der getrockneten Beschichtung versehenen Wärmedämmformkörper mindestens einen Überzug auf der Basis eines organischen oder anorganischen Lacksystems oder einer niedrig schmelzenden Glasur aufbringen.

Es genügt eine zusätzliche Beschichtung auf der Seite, die nach dem Einbau der Wärmedämmformkörper, z.B. zur Wärmeisolation in einem Ofen, aussen, d.h., auf der Seite mit der niedrigeren Temperaturbeaufschlagung liegt. Die Schicht wird zuvor getrocknet oder gegebenenfalls auch getempert.

Geeignete Materialien für derartige Überzüge sind organische Systeme, wie z.B. Acrylharzlacke, Polyesterlacke, Epoxidharzlacke, Alkydharzlacke, Pulver- oder UV-härtende Lacke, aber auch anorganische Systeme, z.B. auf der Basis von Kieselsäureestern, oder auch aufgesprühte oder in sonst geeigneter Weise aufgetragene Silikonschichten. Es ist auch möglich, niedrigschmelzende, vorzugsweise bis 700°C schmelzende, Glasuren als Überzug einzusetzen.

Ein derartiger Überzug des Wärmedämmformkörpers führt nur dann zu festhaltenden und dauerhaften Oberflächen, wenn der Wärmedämmformkörper zuvor mit der erfindungsgemässen Bentonitsuspension behandelt worden ist. Eine direkte Anbringung der genannten organischen oder anorganischen Überzüge auf Wärmedämmformkörper, die aus einer verpressten Mischung von ca. 40 bis 70 Gew.-% einer feinteiligen Komponente, wie z.B. pyrogen hergestelltes Siliciumdioxid, 20 bis 50 Gew.-% Trübungsmittel, z.B. Rutil oder Ilmenit und 1 bis 10 Gew.-% einer hochtemperaturbeständigen Faser, z.B. Aluminiumsilikat, zur Erhöhung der Stabilität bestehen, ist ohne die erfindungsgemässe Beschichtung mit der Bentonitsuspension nicht möglich.

Die relative Biegefestigkeit der Wärmedämmformkörper kann durch diese zweite Beschichtung je nach Dicke des Überzugs um ein Mehrfaches gesteigert werden. Die zweite Beschichtung erlaubt auch die Herstellung ausreichend stabiler geometrischer Formkörper, beispielsweise von Halbschalen zur Rohrisolation, die bisher wegen ungenügender mechanischer Stabilität aus derartigen Materialien nicht zu erhalten waren.

Der Überzug haftet vorzüglich auf den darunter liegenden Schichten aus dem Gemisch von Bentonit und anorganischer Faser. Eine Verschlechterung der Isolierwirkung durch den zusätzlichen Überzug ist nicht beobachtet worden.

Ein weiterer Gegenstand der Erfindung sind Wärmedämmformkörper, welche mit einem Gemisch aus Bentonit und anorganischer Faser beschichtet sind.

Dabei können die Wärmedämmformkörper mit einem Fasernetz oder einem Faserfilz, auf dem die Schicht aus einem Gemisch von Bentonit und anorganischer Faser aufgebracht ist, umgeben sein.

Die Wärmedämmformkörper können untereinander in einem Bausteinprinzip mit einer Schicht aus dem Gemisch von Bentonit und anorganischer Faser, verbunden sein, wobei zusätzlich die nicht verbundenen Seiten mit dem Gemisch, bestehend aus Bentonit und Faser, beschichtet sein können.

Allseitig oder vorzugsweise an den Aussenseiten, d.h., an den Seiten, die nach einem Einbau der Wärmedämmformkörper zu Wärmeisolationszwecken auf der Seite mit der niedrigeren Temperaturbeaufschlagung liegen, können zusätzlich auf der Schicht aus dem Gemisch von Bentonit und anorganischer Faser, Überzüge auf der Basis organischer oder anorganischer Lacksysteme oder auch Silikonverbindungen oder niedrigschmelzender Glasuren angebracht sein. Dabei können ein- oder mehrere Schichten aus demselben oder aus verschiedenartigen Überzugssystemen kombiniert werden.

Die Gestalt der Wärmedämmformkörper ist nicht festgelegt. In bevorzugten Ausführungsformen haben die Wärmedämmformkörper die Gestalt von Platten, zylinderförmigen bzw. halbrunden Hüllen, (z.B. für Röhren oder rohrförmige Öfen) oder auch von kastenförmigen Schalen (z.B. für die Wärmeisolierung von Autoabgaskonvertern).

Grundsätzlich ist es möglich, alle auf der Basis von feinteiligen Füllstoffen, Trübungsmitteln und hochtemperaturbeständiger Faser gepressten Wärmedämmformkörper mit der beschriebenen Schicht bzw. dem zusätzlichen Überzug zu versehen.

Als feinteilige Füllstoffe können diese Wärmedämmformkörper pyrogen hergestelltes Metall- und Metalloxid wie Siliciumdioxid, Titandioxid, Aluminiumoxid, Zirkonoxid, Eisenoxid und/oder deren Mischoxide, gefällte Kieselsäuren, hydrothermal hergestelltes Kalziumsilikat oder Zeolithe enthalten.

In bevorzugten Handelsformen bestehen die Wärmedämmformkörper aus ca. 40 bis 70 Gew.-% einer feinteiligen Komponente, wie z.B. pyrogen hergestelltem Siliciumdioxid, 20 bis 50 Gew.-% eines Trübungsmittels wie z.B. Quarzmehl, Rutil oder Ilmenit, und 1 bis 10 Gew.-% einer hochtemperaturbeständigen Faser, wie z.B. Aluminiumsilikatfaser.

Das geschilderte baukastenförmige Zusammenfügen solcher und ähnlicher Wärmedämmformkörper mittels der erfindungsgemässen Suspension kann auch dann durchgeführt werden, wenn die Wärmedämmformkörper schon einmal vollständig mit der erfindungsgemässen Suspension behandelt worden sind.

Die Erfindung weist die folgenden Vorteile auf:

— geringe Materialkosten, sehr einfaches Verarbeitungsverfahren

— die Isolierwirkung der Wärmedämmformkörper wird im Gegensatz zu bekannten Wärmedämmkörpern, bei denen die Bindersysteme direkt in den Isolierstoff miteingemischt werden, in keiner Weise beeinträchtigt

— die Temperaturstabilität der Wärmedämmformkörper bleibt erhalten oder wird sogar verbessert. Die Wärmedämmformkörper werden nach einer Wärmebehandlung nicht verformt oder rissig. Es bildet sich eine keramische Schicht, die einer Schrumpfung entgegenwirken kann (bei bekannten Wärmedämmformkörper schmilzt die Umhüllung nach einer entsprechenden Temperaturbeanspruchung und beeinträchtigt damit die Isolierwirkung)

— durch die Verwendung der Bentonitsuspension als Bindemittel ist eine fugenfreie Verarbeitung der Wärmedämmformkörper möglich.

### Beispiele

Der in den Beispielen verwendete Bentonit hat folgende Zusammensetzung:

$SiO_2$ = 57,20%
$Al_2O_3$ = 18,60%
$Na_2O$ = 2,10%
$K_2O$ = 0,40%
$CaO$ = 1,10%
$MgO$ = 2,50%
$Fe_2O_3$ = 3,40%
$H_2O$ = 8,30%

Korngrösse < 90 micrometer
Glühverlust: 10 Gew.-%.

Ein wesentliches Beurteilungskriterium der Qualität der Wärmedämmformkörper ist in erster Linie ihre Wärmeleitfähigkeit. Für die Beurteilung ist aber auch die thermische Formfestigkeit und mechanische Festigkeit der Wärmedämmformkörper sowie ihre Verarbeitbarkeit bzw. deren Montagemöglichkeit wesentlich. Die Prüfung der Wärmeleitfähigkeit, die thermische Formfestigkeit und die mechanische Festigkeit erfolgt in den Beispielen an Formkörpern in Gestalt von runden Platten mit den Abmessungen 100 × 20 mm.

### Vergleichsbeispiel (ohne Beschichtung) A

Man stellt in einem schnellaufenden Mischgerät mit ca. 5000 UpM aus 53 Gew.-% einer pyrogenen Kieselsäure mit einer BET-Oberfläche von 300 $m^2$/g, 40 Gew.-% eines feinteiligen Trübungsmittels (Quarzmehl) und 7 Gew.-% einer keramischen Faser auf Basis Aluminiumsilikat (60 Gew.-% $Al_2O_3$-Anteil) eine homogene Mischung her. Die Mischung wird zu Platten mit einem Litergewicht von 300 g/l verpresst und für die Beispiele 1 bis 5 als Vergleich verwendet.

### Beispiel 1

Man stellt in einem schnellaufenden Mischgerät (ca. 1000 bis 2000 Upm und 2 bis 3 min Mischzeit eine homogene Suspension aus 85 Gew.-% Wasser, 13 Gew.-% Bentonit und 2 Gew.-% Aluminiumsilikatfaser (60 Gew.-% $Al_2O_3$) her. Die Aluminiumsilikatfaser wird vor dem Mischen auf eine Faserlänge von 0,5 bis 2 mm aufgemahlen. Die Suspension wird mit Hilfe eines Spritzverfahrens auf die Oberfläche der Platte gemäss Vergleichsbeispiel A aufgetragen. Es wird eine Flach-, Breit-Rundstrahlpistole verwendet, wobei die Bentonitsuspension durch die Injektorwirkung der Zerstäuberluft in den Spritzstrahl gerissen wird und somit gleichmässig auf der Isolierplatte verteilt wird. Die besprühte Platte wird bei 100°C getrocknet und den folgenden Prüfmethoden unterzogen:

1. Wärmeleitfähigkeitsmessung in W/m°C (Watt pro Meter°Celsius).

2. Schrumpfung des Plattendurchmessers in % bei 1000°C und einer Haltezeit von 10 h.

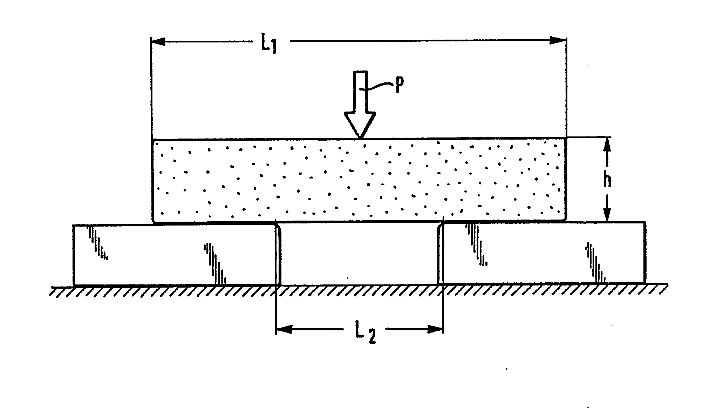

3. Relative Biegefestigkeit in Newton, wobei die Platten als Balken auf zwei Stützen gelagert werden und durch die Einzellast P in der Mitte beansprucht werden. Dabei sind wie in der Figur 1 dargestellt wird

P = Einzellast in Newton (vgl. Tabelle)
$L_1$ = Probenlänge von 100 mm
h = Probenhöhe von 20 mm
$L_2$ = Stützweite von 40 mm.

Die Probe ist durch gleichmässige Steigerung der Belastung stossfrei zu biegen. In den durchgeführten Beispielen wurde ein Vorschub der Einzellast von 5 mm/min gewählt. Die Relativwerte für die Belastbarkeit für die entsprechenden Proben wurden in Newton angegeben.

### Beispiel 2

Es werden Wärmedämmformkörper in Gestalt von Platten entsprechend dem Vergleichsbeispiel A hergestellt, wobei bei der Fertigung der Platte an der Oberfläche ein Faserfilz oder Faservlies mit eingepresst wird. Anschliessend werden die Platten entsprechend dem in Beispiel 1 beschriebenen Verfahren mit einer Bentonitsuspension nachbehandelt. Die relative Biegefestigkeit kann dabei je nach Dicke des Filzes oder Vlieses und deren Einzelfaserlängen zusätzlich um ca. 50 bis 200% gesteigert werden.

### Beispiel 3

Man stellt eine Suspension aus 83 Gew.-% Wasser, 13 Gew.-% Bentonit und 4 Gew.-% Aluminiumsilikatfaser entsprechend Beispiel 1 her. Diese wird mit Hilfe eines Spritzverfahrens auf die Oberfläche der im Vergleichsbeispiel A beschriebenen Wärmedämmformkörper in Gestalt von Platten aufgetragen. Die Wärmedämmformkörper werden anschliessend bei 100°C getrocknet.

### Beispiel 4

Es werden Wärmedämmformkörper entsprechend dem in Beispiel 3 beschriebenen Verfahren oberflächenbehandelt und zusätzlich von einer Seite mit einem Acrylpulverlack beschichtet.

### Beispiel 5

Es werden Wärmedämmformkörper in Gestalt von Platten entsprechend dem in Beispiel 3 beschriebenen Verfahren oberflächenbehandelt und zusätzlich wird eine Glasur (z.B. $PbSiO_3$) auf eine Seite der Oberfläche aufgeschmolzen.

### Vergleichsbeispiel B (ohne Beschichtung)

Man stellt in einem schnellaufenden Mischgerät mit ca. 5000 UpM aus 63 Gew.-% einer pyrogenen Kieselsäure mit einer BET-Oberfläche von 300 $m^2$/g, 30% eines feinteiligen Trübungsmittels (Rutil) und 7 Gew.-% einer keramischen Faser auf Basis Aluminiumsilikat (60 Gew.-% $Al_2O_3$-Anteil) eine homogene Mischung her. Die Mischung kann zu Wärmedämmformkörpern verpresst werden. Im vorliegenden Fall wird die Form von Platten gewählt, ebenso wie im Vergleichsbeispiel A.

### Beispiel 6

Man stellt eine Suspension aus 81 Gew.-% Wasser, 15 Gew.-% Bentonit und 4 Gew.-% Aluminiumsilikatfaser (60 Gew.-% $Al_2O_3$) entsprechend Beispiel 1 her. Diese wird mit Hilfe eines Spritzverfahrens auf die Oberfläche der im Vergleichsbeispiel B beschriebenen Platten aufgetragen. Die Wärmedämmformkörper werden anschliessend bei 100°C getrocknet. Man erhält eine glatte und gleichzeitig abriebfeste Oberfläche.

### Beispiel 7

Es werden Platten entsprechend dem in Beispiel 6 beschriebenen Verfahren oberflächenbehandelt. Die Schicht, bestehend aus Bentonit und anorganischer Faser dient nun als Grundierungsmaterial für einen Acrylpulverlack. Der Lack wird von einer Seite auf die Platte aufgetragen, wobei die lackierte Seite bei Montage der Platten die Aussenseite (kalte Seite) darstellt. Die einseitige Lackierung reicht aus, um die Bruchfestigkeit der Platten um das 2- bis 3fache zu erhöhen. Die Oberfläche ist glatt und abriebfest und zusätzlich kratzfest.

### Vergleichsbeispiel C

Es werden hydrothermal hergestellte Calciumsilikatformteile in Gestalt von Platten mit einem Litergewicht von ca. 240 g/l für die Beispiele 8 und 9 als Vergleich verwendet.

### Beispiel 8

Man stellt eine Suspension aus 81 Gew.-% Wasser, 15 Gew.-% Bentonit und 4 Gew.-% Aluminiumsilikatfaser (60 Gew.-% $Al_2O_3$) entsprechend Beispiel 1 her. Diese wird mit Hilfe eines Spritzverfahrens auf die Oberfläche, der im Vergleichsbeispiel C beschriebenen Platten, aufgetragen. Man erhält eine glatte und gleichzeitig abriebfeste Oberfläche.

### Beispiel 9

Es werden Platten entsprechend dem in Beispiel 8 beschriebenen Verfahren oberflächenbehandelt. Die Schicht, bestehend aus Bentonit und anorganischer Faser dient nun als Grundierungsmaterial für einen Acrylpulverlack. Der Lack wird von einer Seite auf die Platte aufgetragen, wobei die lackierte Seite bei Montage der Platten die Aussenseite (kalte Seite) darstellt. Die einseitige Lackierung reicht aus, um die Bruchfestigkeit um das 2fache zu erhöhen. Die Oberfläche ist glatt, abriebfest und zusätzlich kratzfest.

Die ermittelten Werte sind in den Tabellen 1, 2 und 3 aufgeführt.

### TABELLE 1

| Probe | relative Biegefestigkeit in N (bei Bruch der Probe) | Standardabweichung der relativen Biegefestigkeit | mittlere Temperatur °C | Wärmeleitf. W/m°C | Durchmesserschrumpfung der Platten bei 1000°C u. 10 h Haltezeit (%) | Oberflächenbeschaffenheit |
|---|---|---|---|---|---|---|
| Vergleichsplatte A | 62,9<br>79,8<br>75,6<br>64,9<br>69,7 | 70,6 ± 7,1 | 163<br>299<br>357<br>465 | 0,029<br>0,029<br>0,033<br>0,041 | 2,3 | rauhe abreibbare Oberfläche |
| Beispiel 1 | 127,6<br>119,3<br>138,8<br>116,1<br>123,2 | 125,0 ± 8,8 | 162<br>252<br>360<br>466 | 0,029<br>0,030<br>0,036<br>0,042 | 1,2 | glatte abriebfeste Oberfläche |
| Beispiel 3 | 146,6<br>139,2<br>140,0 | | die zusätzliche Beschichtung geht nicht in die Dämmwirkung ein | | | glatte abriebfeste Oberfläche |
| Beispiel 4 | 185,0<br>185,2<br>178,3 | | | | | glatte abriebfeste und zusätzlich kratzfeste Oberfläche |
| Beispiel 5 | 185,4<br>183,0<br>184,6 | | | | | glatte abriebfeste und zusätzlich kratzfeste Oberfläche |

## TABELLE 2

| Probe | relative Biegefestig-keit in N (bei Bruch der Probe) | Standardabwei-chung der relativen Biegefestig-keit | mittlere Tempera-tur °C | Wärmeleitf. W/m°C | Durch-messer-schrump-fung der Platten bei 1000°C u. 10 h Halte-zeit (%) | Oberflächenbeschaffen-heit |
|---|---|---|---|---|---|---|
| Vergleichs-platte B | 131,0 123,9 126,3 | | 162 260 349 464 | 0,018 0,027 0,029 0,034 | 3,5-4,0 | leicht abreibbare Ober-fläche |
| Beispiel 6 | 133,5 146,5 141,6 | | 170 272 373 476 | 0,018 0,023 0,026 0,029 | 1,0-2,0 | glatte abriebfeste Ober-fläche |
| Beispiel 7 | 307,3 275,8 296,1 | | 424 432 429 | 0,027 0,025 0,025 | 1,0-2,0 | glatte abriebfeste und zu-sätzlich kratzfeste Ober-fläche |

## TABELLE 3

| Probe | relative Biegefestig-keit in N (bei Bruch der Probe) | Standardabwei-chung der relativen Biegefestig-keit | mittlere Tempera-tur °C | Wärmeleitf. W/m°C | Durch-messer-schrump-fung der Platten bei 1000°C u. 10 h Halte-zeit (%) | Oberflächenbeschaffen-heit |
|---|---|---|---|---|---|---|
| Vergleichs-beispiel C | 254,3 246,2 239,8 | | 167 276 388 497 | 0,0704 0,0809 0,0947 0,1082 | 1 - 2 | leicht abreibbare Ober-fläche |
| Beispiel 8 | 362,2 354,5 333,2 | | 166 278 385 498 | 0,0717 0,0795 0,0936 0,1076 | 1 - 2 | glatte abriebfest Ober-fläche |
| Beispiel 9 | 564,5 521,3 526,5 | | die zusätzliche Beschich-tung geht nicht in die Dämmwirkung ein | | 1 - 2 | glatte abriebfeste und zu-sätzlich kratzfeste Ober-fläche |

## Patentansprüche

1. Wässrige Suspension, bestehend neben Wasser aus 2 bis 50 Gew.-% eines Gemisches aus Bentonit und anorganischer Faser, mit einem Anteil an anorganischer Faser von 1 bis 30 Gew.-% und einem Anteil an Bentonit von 1 bis 30 Gew.-%, bezogen auf die Gesamtmenge der Suspension, wobei die Gesamtfeststoffmenge einen Anteil von 50 Gew.-%, vorzugsweise 40 Gew.-%, bezogen auf die Suspension, nicht überschreitet.

2. Suspension nach Anspruch 1, bestehend neben Wasser aus 4 bis 10 Gew.-% anorganischer Faser und 5 bis 15 Gew.-% Bentonit, bezogen auf die Gesamtmenge der Suspension, wobei die Gesamtfeststoffmenge einen Anteil von 25 Gew.-%, bezogen auf die Suspension, nicht überschreitet.

3. Suspension nach einem der Ansprüche 1 oder 2, dadurch gekennzeichnet, dass die anorganische Faser aus Aluminiumsilikat, Aluminiumoxid, Zirkonoxid, Kalziumsilikat, Asbest, Quarz oder/und silikatischen Gläsern besteht.

4. Verfahren zur Verbesserung der mechanischen Eigenschaften von Wärmedämmformkörpern, unter Verwendung der Suspension gemäss Anspruch 1 bis 3, dadurch gekennzeichnet, dass man die wässrige Suspension, gegebenenfalls wiederholt, auf die Wärmedämmformkörper aufgibt, die Wärmedämmformkörper, gegebenenfalls bei einer Temperatur von 100 bis 150°C, trocknet.

5. Verfahren nach Anspruch 4, dadurch gekennzeichnet, dass man auf die Wärmedämmformkörper ein Fasernetz oder einen Faserfilz aufpresst und dann die Beschichtung aufbringt.

6. Verfahren nach Anspruch 4 oder 5, dadurch gekennzeichnet, dass man die Suspension auf mindestens eine Seite der Wärmedämmformkörper aufgibt und letztere dann mit weiteren Wärmedämmformkörper so zusammenfügt und trocknet, dass die Suspension unter Bildung einer Zwischenschicht aus Bentonit und anorganischer Faser als Bindemittel wirkt.

7. Verfahren nach Anspruch 4 bis 6, dadurch gekennzeichnet, dass man auf die mit der getrockneten Beschichtung versehenen Wärmedämmformkörper mindestens einen Überzug auf der Basis eines organischen oder anorganischen Lacksystems oder einer niedrigschmelzenden Glasur anbringt.

8. Wärmedämmformkörper, dadurch gekennzeichnet, dass sie mit einem Gemisch aus Bentonit und anorganischer Faser beschichtet sind.

9. Wärmedämmformkörper nach Anspruch 8, dadurch gekennzeichnet, dass sie mit einem Fasernetz oder einem Faserfilz, auf dem die Schicht aus einem Gemisch von Bentonit und anorganischer Faser aufgebracht ist, umgeben sind.

10. Wärmedämmformkörper nach Anspruch 8 oder 9, dadurch gekennzeichnet, dass sie untereinander in einem Bausteinprinzip mit einer Schicht aus dem Gemisch von Bentonit und anorganischer Faser verbunden sind.

11. Wärmedämmformkörper nach den Ansprüchen 8 bis 10, dadurch gekennzeichnet, dass sie einen oder mehrere gleichartige oder verschiedene Überzüge aus anorganischem oder organischem Lack oder einer niedrigschmelzenden Glasur auf der Beschichtung aus Bentonit und anorganischer Faser aufweisen.

12. Wärmedämmformkörper nach den Ansprüchen 8 bis 11, dadurch gekennzeichnet, dass sie neben der Beschichtung und dem Überzug aus einer verpressten Mischung von ca. 40 bis 70 Gew.-% einer feinteiligen Komponente, wie z.B. pyrogen hergestelltes Siliciumdioxid, 20 bis 50 Gew.-% Trübungsmittel, z.B. Quarzmehl, Rutil oder Ilmenit, und 1 bis 10 Gew.-% einer hochtemperaturbeständigen Faser, z.B. Aluminiumsilikat, zur Erhöhung der Stabilität, bestehen.

**Claims**

1. Aqueous suspension, consisting, in addition to water, of from 2 to 50% by weight of a mixture of bentonite and inorganic fibres, with a proportion of inorganic fibres from 1 to 30% by weight and a proportion of bentonite from 1 to 30% by weight, based on the total quantity of the suspension, whereby the total solids does not exceed a proportion of 50% by weight, preferably 40% by weight, based on the suspension.

2. Suspension according to claim 1, consisting, in addition to water, of from 4 to 10% by weight of inorganic fibres and from 5 to 15% by weight of bentonite, based on the total quantity of the suspension, whereby the solids do not exceed a proportion of 25% by weight, based on the suspension.

3. Suspension according to one of claims 1 or 2, characterised in that the inorganic fibres consist of aluminium silicate, aluminium oxide, zircon oxide, calcium silicate, asbestos, quartz and/or silicate glasses.

4. Process for improving the mechanical properties of heat insulating mouldings, by using a suspension according to claim 1 to 3, characterised in that the aqueous suspension is applied, optionally repeatedly, to the heat insulating mouldings, the heat insulating mouldings are optionally dried at a temperature from 100 to 150°C.

5. Process according to claim 4, characterised in that a fibre net or a fibre web is pressed onto the heat insulating mouldings and the coating is then applied.

6. Process according to claim 4 or 5, characterised in that the suspension is applied to at least one side of the heat insulating mouldings, and the latter are then added to further heat insulating mouldings and dried, such that the suspension acts as bonding agent by the formation of an intermediate layer of bentonite and inorganic fibres.

7. Process according to claim 4 to 6, characterised in that at least one coating, based on an organic or inorganic lacquer system or a low-melting glaze, is applied to the heat insulating mouldings provided with the dried coating.

8. Heat insulating mouldings, characterised in that they are coated with a mixture of bentonite and inorganic fibres.

9. Heat insulating mouldings according to claim 8, characterised in that they are surrounded by a fibre net or a fibre web, on which the layer of a mixture of bentonite and inorganic fibres is applied.

10. Heat insulating mouldings according to claim 8 or 9, characterised in that they are connected to each other as units by a layer of the mixture of bentonite and inorganic fibres.

11. Heat insulating mouldings according to claim 8 to 10, characterised in that they have one or several coverings of the same or different type, of inorganic or organic lacquer or a low melting glaze on the coating of bentonite and inorganic fibres.

12. Heat insulating mouldings according to claims 8 to 11, characterised in that in addition to the coating and the covering, they consist of a pressed mixture, for increasing stability, of about 40 to 70% by weight of a finely-divided component such as pyrogenically produced silicon dioxide, from 20 to 50% by weight of opacifier, for example quartz, rutile or ilmenite, and from 1 to 10% by weight of a high temperature-resistant fibre, for example aluminium silicate.

**Revendications**

1. Suspension aqueuse constituée, en plus d'eau, de 2 à 50% en poids d'un mélange de bentonite et de fibres minérales, ayant une proportion de fibres minérales allant de 1 à 30% en poids et une proportion de bentonite allant de 1 à 30% en poids, rapportées à la quantité totale de la suspension, la quantité totale de matières solides n'excédant pas une proportion de 50% en poids, préférablement de 40% en poids, rapportée à la suspension. De préférence, la suspension selon l'invention contient de 4 à 10% en poids de fibres minérales et de 5 à 15% en poids de bentonite, rapportés à la quantité totale de la suspension, la quantité totale de matières solides n'excédant pas une proportion de 25% en poids rapportée à la suspension.

2. Suspension selon la revendication 1, constituée, en plus d'eau, de 4 à 10% en poids de fibres minérales et de 5 à 15% en poids de bentonite, rapporté à la quantité totale de la suspension, la quantité totale de substance solide n'excédant pas une proportion de 25% en poids, rapportée à la suspension.

3. Suspension selon l'une des revendications 1 et 2, caractérisée en ce que les fibres minérales sont constituées de silicate d'aluminium, d'oxyde d'aluminium, d'oxyde de zirconium, de silicate de calcium, d'amiante, de quartz et/ou de verres au silicate.

4. Procédé pour l'amélioration des propriétés mécaniques de corps moulés calorifuges, par utilisation de la suspension selon les revendications 1 à 3, caractérisé par le fait que l'on dépose, éventuellement à plusieurs reprises, la suspension aqueuse sur les corps moulés calorifuges, que l'on sèche les corps moulés calorifuges, éventuellement à une température de 100 à 150°C.

5. Procédé selon la revendication 4, caractérisé par le fait que l'on applique par pression sur les corps moulés calorifuges, un réseau de fibres ou un feutre de fibres et que l'on applique ensuite le revêtement.

6. Procédé selon la revendication 4 ou 5, caractérisé par le fait que l'on dépose la suspension sur au moins une face des corps moulés calorifuges et qu'enfin on assemble ces derniers avec d'autres corps moulés calorifuges et sèche, de sorte que la suspension, par information d'une couche intermédiaire de bentonite et de fibres minérales, agit en tant que liant.

7. Procédé selon les revendications 4 à 6, caractérisé par le fait que l'on applique sur les corps moulés calorifuges pourvus du revêtement séché au moins une couche à base d'un système de vernis organique ou minéral ou d'une glaçure à joint de fusion bas.

8. Corps moulés calorifuges, caractérisés par le fait qu'ils sont revêtus d'un mélange de bentonite et de fibres minérales.

9. Corps moulés calorifuges selon la revendication 8, caractérisés par le fait qu'ils sont entourés d'un réseau de fibres ou d'un feutre de fibres, sur lequel la couche d'un mélange de bentonite et de fibres minérales est appliquée.

10. Corps moulés calorifuges selon la revendication 8 ou 9, caractérisés par le fait qu'ils sont reliés les uns aux autres dans un principe modulaire par une couche du mélange de bentonite et de fibres minérales.

11. Corps moulés calorifuges selon les revendications 8 à 10, caractérisés par le fait qu'ils présentent un ou plusieurs revêtements identiques ou différents de vernis organique ou minéral ou d'une glaçure à point de fusion bas, sur le revêtement de bentonite et de fibres minérales.

12. Corps moulés calorifuges selon les revendications 8 à 11, caractérisés par le fait qu'ils sont constitués en plus du revêtement et de la couche supplémentaire, d'un mélange comprimé d'environ 40 à 70% en poids d'un composant finement divisé tel que par exemple du dioxyde de silicium préparé par pyrogénation, 20 à 50% en poids d'opacifiant, par exemple de la poudre de quartz, du rutile ou de l'ilménite, et 1 à 10% en poids d'une fibre résistant aux températures élevées par exemple du silicate d'aluminium, pour l'augmentation de la stabilité.